(19)

Europäisches
Patentamt
European
Patent Office
Office européen
des brevets

(11) **EP 3 282 404 A1**

(12) **EUROPEAN PATENT APPLICATION**

(43) Date of publication:
**14.02.2018 Bulletin 2018/07**

(51) Int Cl.:
**G06Q 10/00** *(2012.01)*　　**G06Q 10/06** *(2012.01)*

(21) Application number: **17185710.5**

(22) Date of filing: **10.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.08.2016　IN 201621027362**

(71) Applicant: **Tata Consultancy Services Limited
Maharashtra (IN)**

(72) Inventors:
• **Hirpara, Avni Odhavjibhai
411013 Pune - Maharashtra (IN)**
• **Shimpi, Vikrant Vikas
411013 Pune - Maharashtra (IN)**
• **Natu, Maitreya
411013 Pune - Maharashtra (IN)**
• **Sadaphal, Vaishali Paithankar
411013 Pune - Maharashtra (IN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR ANALYZING AND PRIORITIZING ISSUES FOR AUTOMATION**

(57)　System and method for analyzing and prioritizing issues for automation are disclosed. In an embodiment, a method for addressing issues associated with automation, and more particularly to, system and method for analyzing and prioritizing issues for automation is disclosed. The problem of analyzing and prioritizing issues for automation that result in benefits is disclosed. The present disclosure proposes to select only those issues for automation that are expected to last long enough to repay cost invested in their automation. Further, the proposed approach prioritizes the issues on the basis of benefits realized by automation of an issue with respect to cost of implementing automation and savings in the cost of resolution of the issue due to automation. Furthermore, the proposed approach compares and contrasts two case studies and demonstrates how the inherent differences about the domain get captured through this approach and are reflected in various steps of automation prioritization.

FIG. 2

EP 3 282 404 A1

A

Computing by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation — 212

Computing by said one or more hardware processors, an equilibrium point of the one or more issues described in said one or more registered tickets selected for day-zero automation based on a comparison of (i) the computed total cost of automated operations and (ii) the computed total cost of manual operations to select the one or more suitable issues for automation — 214

Selecting based upon the equilibrium point computed, the one or more issues for automating for optimizing the efforts involved in resolution of the one or more issues. — 216

**FIG. 2 (cont.)**

**Description**

CROSS-REFERENCE TO RELATED APPLICATIONS AND PRIORITY

The patent application claims priority to Indian Patent Application 201621027362, filed on August 10, 2016.

TECHNICAL FIELD

The disclosure herein generally relate to a method for addressing issues associated with automation and, more particularly, to system and method for analyzing and prioritizing issues for automation is disclosed.

BACKGROUND

Information technology (IT) systems of today's enterprises are continuously monitored and managed by a team of resolvers. Any issue in an IT system is reported in the form of tickets, such as trouble tickets. A ticket may contain various details of an observed issue, such as reporting time, system-of-origin, and severity. In addition, the ticket may include information of the actual issue which is hidden in the ticket description along with other information. Knowledge of the actual issue enables the team of resolvers to resolve or troubleshoot an issue or escalate it further to the specialists depending upon their severity.

Existing approaches primarily focus on resolving tickets that gives idea about how to automate an issue which is largely manual, error prone and time consuming.

Automation planners tend to ignore key aspects while planning automation. For example, construction of automated solutions involves a cost of the efforts required in creating automation scripts and is a function of complexity of resolution procedures. Furthermore, all issues may not be completely automatable because of the inherent nature of their resolution. For such issues, there is still manual effort involved after automation.

While automation immediately leads to a benefit of reduced efforts, the true benefits are realized only after the automation is executed long enough such that the efforts savings outweigh the efforts invested in enabling automation.

A range of issues in the enterprise systems have a finite life time. This property is more prevalent in application space where application-specific issues occur for a time until the application is stabilized, decommissioned or replaced by another application. Hence if automation is not carefully planned, then it might lead to a minimal or no benefits.

SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

Systems and methods of the present disclosure enable analyzing and prioritizing issues for automation. In an embodiment of the present disclosure, there is provided a method for analyzing and prioritizing issues for automation, the method comprising: obtaining, by one or more hardware processors, one or more registered tickets comprising description pertaining to one or more issues of a user; mapping description of said one or more registered tickets to one or more corresponding entries in one or more service catalogs in the system; determining, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs; identifying at least a subset of said one or more registered tickets for day-zero automation resolution based on said one or more composite and ambiguous matches; computing, by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation; computing, by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation; computing, by said one or more hardware processors, an equilibrium point of the one or more issues described in said one or more registered tickets selected for day-zero automation based on a comparison of (i) the computed total cost of automated operations and (ii) the computed total cost of manual operations to select the one or more issues suitable for automation; selecting, based upon the equilibrium point computed, the one or more issues for automating for optimizing the efforts involved in resolution of the one or more issues; eliminating the one or more issues where the life of the one or more issues is less than the equilibrium point computed for the one or more issues for further determining one or more issues to be automated; performing, based upon the one or more issues determined for automation, a prioritization of the one or more issues for computing an optimized value of automating the one or more issues determined for automation within a pre-defined time value; and performing the prioritization by eliminating the one or more issues determined for automation for which the computed equilibrium point is greater than the pre-defined time value.

In an embodiment of the present disclosure, there is provided a system for analyzing and prioritizing issues for automation, the system comprising one or more processors; one or more data storage devices operatively coupled to the one or more processors and configured to store instructions configured for execution by the one or more processors to: obtain, by one or more hardware processors, one or more registered tickets comprising description pertaining to one or more issues of a user; map description of said one or more registered tickets to one or more corresponding entries in one or more service catalogs in the system; determine, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs; identify at least a subset of said one or more registered tickets for day-zero automation resolution based on said one or more composite and ambiguous matches; compute, by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation; compute, by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation; compute, by said one or more hardware processors, an equilibrium point of the one or more issues described in said one or more registered tickets selected for day-zero automation based on a comparison of (i) the computed total cost of automated operations and (ii) the computed total cost of manual operations to select the one or more issues suitable for automation; select, based upon the equilibrium point computed, the one or more issues for automating for optimizing the efforts involved in resolution of the one or more issues; eliminate the one or more issues where the life of the one or more issues is less than the equilibrium point computed for the one or more issues for further determining one or more issues to be automated; perform, based upon the one or more issues determined for automation, a prioritization of the one or more issues for computing an optimized value of automating the one or more issues determined for automation within a pre-defined time value; and eliminate the one or more issues determined for automation for which the computed equilibrium point is greater than the pre-defined time value for performing the prioritization.

In an embodiment of the present disclosure, a processor implemented system is provided. The processor implemented system comprises a memory storing instructions and a database, and a hardware processor coupled to the memory, wherein the hardware processor is configured by the instructions to: obtaining, by one or more hardware processors, one or more registered tickets comprising description pertaining to one or more issues of a user; mapping description of said one or more registered tickets to one or more corresponding entries in one or more service catalogs in the system; determining, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs; identifying at least a subset of said one or more registered tickets for day-zero automation resolution based on said one or more composite and ambiguous matches; computing, by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation; computing, by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation; computing, by said one or more hardware processors, an equilibrium point of the one or more issues described in said one or more registered tickets selected for day-zero automation based on a comparison of (i) the computed total cost of automated operations and (ii) the computed total cost of manual operations to select the one or more issues suitable for automation; selecting, based upon the equilibrium point computed, the one or more issues for automating for optimizing the efforts involved in resolution of the one or more issues; eliminating the one or more issues where the life of the one or more issues is less than the equilibrium point computed for the one or more issues for further determining one or more issues to be automated; performing, based upon the one or more issues determined for automation, a prioritization of the one or more issues for computing an optimized value of automating the one or more issues determined for automation within a pre-defined time value; and performing the prioritization by eliminating the one or more issues determined for automation for which the computed equilibrium point is greater than the pre-defined time value.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for analyzing and prioritizing issues for automation according to an embodiment of the present disclosure;

FIG. 2 is a flowchart illustrating the steps involved for analyzing and prioritizing issues for automation according to an embodiment of the present disclosure;

FIG. 3 shows the graphical representation of different stages of automation of an issue with the total efforts spent in the manual and automated resolution phases according to an embodiment of the present disclosure;

FIG. 4 shows the graphical representation of computing of an equilibrium point when the cost of automated operations is equal to the cost of manual operations, computing the total cost of automated operations and elimination of issues in case whose life is less than equilibrium point in case of complete automation.

FIG. 5 shows the graphical representation of computing of equilibrium point, computing the total cost of automated operations and elimination of issues whose life is less than the equilibrium point in case of partial automation according to an embodiment of the present disclosure;

FIG. 6 shows the graphical representation of life and the equilibrium point of the issues and their comparison in the case of IT infrastructure issues according to an embodiment of the present disclosure;

FIG. 7 shows the graphical representation of an example of an issue whose life is less than the equilibrium point and is hence eliminated according to an embodiment of the present disclosure;

FIG. 8 shows the graphical representation of an example of few issues which are eliminated as the equilibrium point is reached beyond automated horizon and hence cannot be automated

FIG. 9 shows the graphical representation of an example of issues for which the efforts benefit are negative within the automated horizon as for them equilibrium point is achieved beyond the automated horizon in the case of infrastructure issues according to an embodiment of the present disclosure;

FIG. 10 shows the graphical representation of the net benefits of automation of issues having a life greater than their equilibrium point and their equilibrium point arrives within the automated horizon in the case of infrastructure issues according to an embodiment of the present disclosure;

FIG. 11 shows the graphical representation of the prioritization of the issues having a life greater than their equilibrium point and their equilibrium point arrives within the automated horizon based on the decreasing order of their benefits in the case of infrastructure issues according to an embodiment of the present disclosure;

FIG. 12 shows the graphical representation of the life and the equilibrium point of the issues and their comparison in the case of application issues according to an embodiment of the present disclosure;

FIG. 13 shows the graphical representation of an example of few issues which are eliminated as the equilibrium point is reached beyond automated horizon and hence cannot be automated according to an embodiment of the present disclosure;

FIG. 14 shows the graphical representation of an example of the issues whose automated horizon is less than their equilibrium point and are eliminated in the case of application issues according to an embodiment of the present disclosure;

FIG. 15 shows the graphical representation of the negative benefit within the automated horizon of the issues whose automated horizon is less than their equilibrium point and are eliminated in case of application issues according to an embodiment of the present disclosure;

FIG. 16 shows the graphical representation of the net benefits of the issues having a life greater than their equilibrium point and the equilibrium point of the issues having a life greater than their equilibrium point arrives within the automated horizon in case of application issues according to an embodiment of the present disclosure;

FIG. 17 shows the graphical representation of the prioritization of the issues having a life greater than their equilibrium point and their equilibrium point arrives within the automated horizon based on the decreasing order of their benefits in the case of application issues according to an embodiment of the present disclosure;

FIG. 18 shows the graphical representation of the comparison of issues properties and automation potential in infrastructure and application issues according to an embodiment of the present disclosure;

FIG. 19 shows the graphical representation of the comparison of the current approaches of prioritization with the proposed approach by depicting the net benefits of the automation of different approaches in the infrastructure issues according to an embodiment of the present disclosure; and

FIG. 20 shows the graphical representation of the comparison of the current approaches of prioritization with the proposed approach by depicting the net benefits of the automation of different approaches in application issues according to an embodiment of the present disclosure.

DETAILED DESCRIPTION OF EMBODIMENTS

Exemplary embodiments are described with reference to the accompanying drawings. In the FIGS., the left-most digit(s) of a reference number identifies the FIG. in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments.

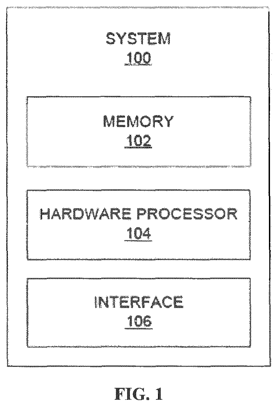

Referring now to the drawings, and more particularly to FIGS. 1 through 20, where similar reference characters denote corresponding features consistently throughout the figures, there are shown preferred embodiments and these embodiments are described in the context of the following exemplary system and/or method.

Reference will now be made in detail to specific embodiments of the invention including the best modes contemplated by the inventors for carrying out the invention. Examples of these specific embodiments are illustrated in the accompanying figures. While the invention is described in conjunction with these specific embodiments, it will be understood that it is not intended to limit the invention to the described embodiments. On the contrary, it is intended to cover alternatives, modifications, and equivalents as may be included within the spirit and scope of the invention as defined by the appended claims. In the following description, specific details are set forth in order to provide a thorough understanding of the present invention.

According to an embodiment, a method for addressing issues associated with automation, and more particularly to, system and method for analyzing and prioritizing issues for automation is disclosed. The problem of analyzing and prioritizing issues for automation that result in benefits is disclosed. The present disclosure proposes to select only those issues for automation that are expected to last long enough to repay the cost invested in their automation. Further, the proposed approach prioritizes the issues on the basis of the benefits realized by automation of an issue with respect to the cost of implementing automation and savings in the cost of resolution of the issue due to automation. Furthermore, the proposed approach compares and contrasts two case studies and demonstrates how the inherent differences about the domain get captured through this approach and are reflected in various steps of automation prioritization.

Referring particularly to FIG.1, it is an exemplary block diagram of a system 100 for analyzing and prioritizing issues for automation according to an embodiment of the present disclosure. The system 100 comprises a memory 102, a hardware processor 104, and an input/output (I/O) interface 106. Although the exemplary block diagram and the associated description refers to a memory, a hardware processor, and an input/output communication interface, it may be understood that one or more memory units, one or more hardware processors, and/or one or more communication interfaces may be comprised in the system 100. The memory 102 may further includes one or more functional modules (not shown in FIG. 1). The memory 102, the hardware processor 104, the input/output (I/O) interface 106, and/or the modules may be coupled by a system bus or a similar mechanism.

The memory 102, may store instructions, any number of pieces of information, and data, used by a computer system, for example the system 100 to implement the functions of the system 100. The memory 102 may include for example, volatile memory and/or nonvolatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 102 may be configured to store information, data, instructions or the like for enabling the system 100 to carry out various functions in accordance with various example embodiments.

Additionally or alternatively, the memory 102 may be configured to store instructions which when executed by the hardware processor 104 causes the system 100 to behave in a manner as described in various embodiments. The memory 102 stores the functional modules and information, for example, information (e.g., one or more registered tickets, one or more technology-specific service catalogs, dictionary words, non-dictionary words, a set of registered tickets identified for day-zero automation, a set of short lived issues, a priority list of registered tickets that include short lived issues, issues, ticket descriptions, and the like).

The hardware processor 104 may be implemented as one or more microprocessors, microcomputers, microcontrollers, digital signal processors, central processing units, state machines, logic circuitries, and/or any devices that manipulate signals based on operational instructions. Further, the hardware processor 104 may comprise a multi-core architecture. Among other capabilities, the hardware processor 104 is configured to fetch and execute computer-readable instructions or modules stored in the memory 102. The hardware processor 104 may include circuitry implementing, among others, audio and 10 logic functions associated with the communication. For example, the hardware processor 104 may include, but are not limited to, one or more digital signal processors (DSPs), one or more microprocessor, one or more special-purpose computer chips, one or more field programmable gate arrays (FPGAs), one or more application-specific integrated circuits (ASICs), one or more computer(s), various analog to digital converters, digital to analog converters, and/or other support circuits.

The hardware processor 104 thus may also include the functionality to encode messages and/or data or information. The hardware processor 104 may include, among others a clock, an arithmetic logic unit (ALU) and logic gates configured to support operation of the hardware processor 104. Further, the hardware processor 104 may include functionality to execute one or more software programs, which may be stored in the memory 102 or otherwise accessible to the hardware processor 104. In an embodiment, when the one or more issues in the prioritized list of registered tickets are attended for resolution, next time, for a similar (and/or identical) set of issues or near similar set of issues, the system 100 may perform comparison of the text description of these similar (and/or identical) set of issues or near similar set of issues and obtain (i) tickets for day-zero automation of resolution and/or (ii) short lived issues for generating prioritized list of issues for automation. This enables the system 100 to learn pattern of (i) resolution and day-zero automation and (ii) the elimination of short lived issues, and stores the learnt pattern in the memory 102, and apply the learnings on subsequent registered tickets pertaining to similar scenarios, or near similar scenarios. This enables the system 100 to perform day-zero automation and analyze and prioritize issues much faster in a seamless manner. Based on the learnings, and the process followed by the system 100, one or more service catalogs (e.g., technology-specific service catalog) may continually updated.

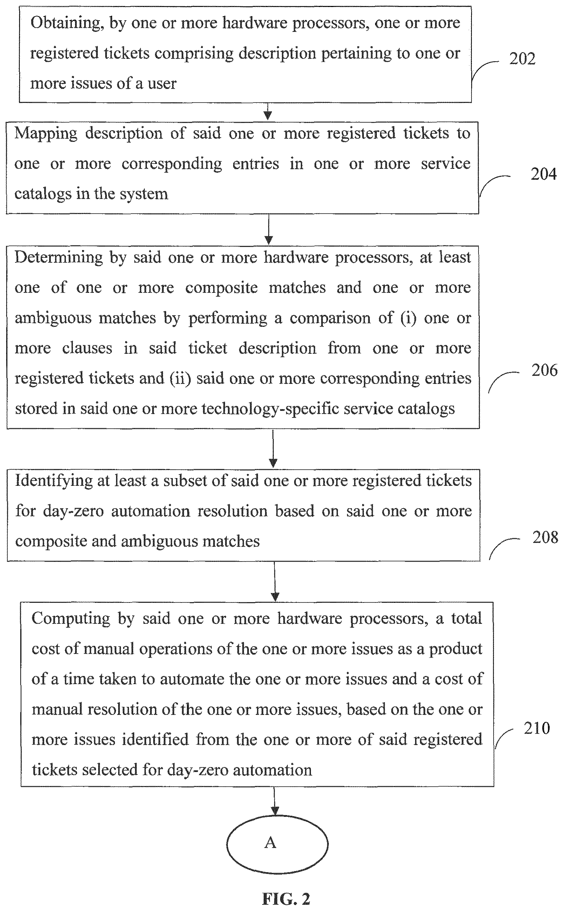

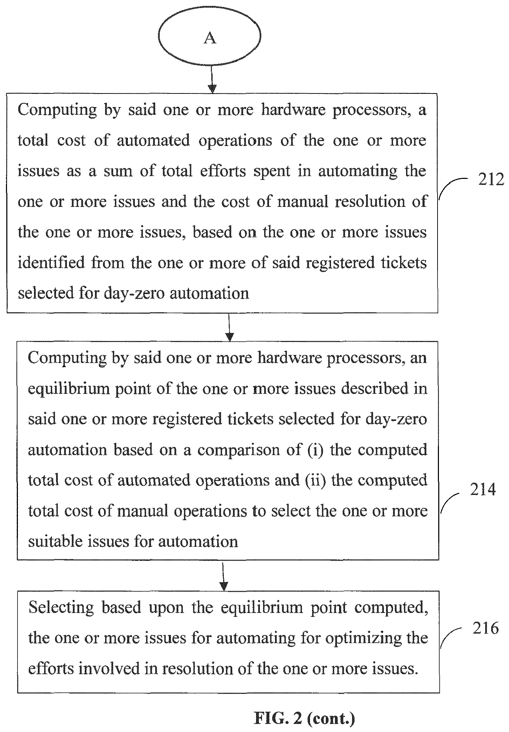

FIG. 2, with reference to FIG. 1, is a flow diagram illustrating a processor implemented method for analyzing and prioritizing and planning issues for automation using the system 100 according to an embodiment of the present disclosure. The steps of the method of the present disclosure will now be explained with reference to the components of the system 100 as depicted in FIG. 1. The hardware processor 104 is configured by programmed instructions stored in the memory 102. The hardware processor 104 when configured by the programmed instructions generates one or more lists of prioritized registered tickets as described hereinafter. In an embodiment, at step 202, the hardware processor 104 obtains one or more registered tickets comprising ticket description pertaining to one or more issues. In an embodiment, at step 204, the hardware processor 104 maps the ticket description of the one or more registered tickets to one or more corresponding entries being present in the one or more technology-specific service catalogs stored in the memory 102. In an embodiment, the step 204 is preceded by removing at least one of one or more stop words, and one or more expressions from the ticket description.

In an embodiment of the present disclosure, at step 206, the hardware processor 104 determines at least one of one or more composite matches and one or more ambiguous matches by performing a comparison of (i) one or more clauses in said ticket description from one or more registered tickets and (ii) said one or more corresponding entries stored in said one or more technology-specific service catalogs.

In an embodiment of the present disclosure, at step 208, the hardware processor 104 perform an identification of at least a subset of said one or more registered tickets for day-zero automation resolution based on said one or more composite and ambiguous matches

In an embodiment, at step 210 the hardware processor 104 computes a total cost of manual operations of the one or more issues as a product of a time taken to automate the one or more issues and a cost of manual resolution of the one or more issues, based on the one or more issues identified from the one or more of said registered tickets selected for day-zero automation.

In an embodiment of the present disclosure at step 212, the hardware processor 104 computes a total cost of automated operations of the one or more issues as a sum of total efforts spent in automating the one or more issues and the cost of manual resolution of the one or more issues, based on the one or more issues identified from the one or more of said registered tickets selected for day-zero automation.

In an embodiment of the present disclosure at step 214, the hardware processor 104 computes an equilibrium point of the one or more issues described in said one or more registered tickets selected for day-zero automation based on a comparison of (i) the computed total cost of automated operations and (ii) the computed total cost of manual operations to select the one or more suitable issues for automation.

In an embodiment of the present disclosure at step 216, the hardware processor 104 finally performs selection of the one or more issues for automating for optimizing the efforts involved in resolution of the one or more issues based upon the equilibrium point computed.

In an embodiment of the present disclosure, the hardware processor 104 eliminates the short-lived issues by (i) by computing the cost of manual resolution of the issue, (ii) computing the cost of automated resolution of the issue, (iii) identifying the issues that are not suitable for automation by comparing the cost of manual operations and the cost of automated operations, (iv) defining equilibrium point of the issue based on the manual and automated cost, (v) eliminating the issues where the life of an issue is less than the equilibrium point of issue, and (vi) eliminating the issues if automated horizon in time is less than the equilibrium point of the issue as for such issues efforts benefit is negative within automated horizon. In an embodiment, the cost of automated resolution is computed as the sum of the total efforts spent in pre-automation phase and the total efforts spent in post-automation phase. In an embodiment, the pre-automation phase comprises determining the costs that are associated for an environment set-up (for example, developing automation script for resolving the issue). The post-automation phase comprises determining the costs that may be associated with run-time resolution of the issue (for example, cost of executing a script). In an embodiment, the step of defining the equilibrium point comprises calculation of a non-automatable factor, which is the ratio of the cost of automated resolution to the cost of manual resolution.

In an embodiment of the present disclosure, the hardware processor 104 further prioritizes issues that are shortlisted after the elimination step as described above. In an embodiment of the present disclosure, the issues may be prioritized by (i) computing (or calculating) effort benefit based on the difference between manual cost and the automation cost after the equilibrium point in the life of an issue (ii) business benefits of automation and (iii) quality benefits of automation. In an embodiment, the step of computing effort benefits may include calculating effort benefits of full and partial automation. In an embodiment, the full automation comprises of a stage where no manual intervention is required for resolving the issue (for example, a change password request which may be completed without any manual intervention). The partial automation comprises of a stage where there is still some level of manual intervention (resolution of the issue is still not fully automated, for example, installing an application on a system which need an administrative permissions). In another embodiment, computing effort benefits of automation comprises computing targeted automation time as the minimum value of either life of an issue or automated horizon. The automated horizon comprises of a targeted business time to obtain benefits from automating the issue. The targeted automation time comprises automation preparation time and execution based on automation time.

In an embodiment of the present disclosure, the system and method for analyzing and prioritizing issues for automation is described. The system and method systematically analyzes the issues observed in an enterprise IT system, wherein the issues may be related to infrastructure(s) and/or applications respectively. Further, the issues that are best suited for automation are identified and a plan for automation prioritization of the issues is presented. There are shown (preferred) embodiments and these embodiments are described in the context of the following exemplary system and/or method and shall not be construed as limiting embodiments.

According to an embodiment of the present disclosure, in order to prioritize one or more issues related to automation, the system and method may use one or more data sources commonly available in an enterprise IT system. The one or more data sources may comprise tickets logs, configuration database, service catalog and the like. Organizations use ticketing tools to log various issues observed in the system and service requests raised by the users. These issues are logged in the form of tickets and contain rich source of information such as time of occurrence, a ticket description, an affected inventory item, a resolver name, resolution steps performed, resolution time and the like.

The configuration database is described herein. Organizations maintain a configuration management database (CMDB) that contains details of IT inventory of applications and infrastructure components. The CMDB may also maintain criticality of different system components with respect to served business functions. The service catalog is described herein. Service providers maintain a catalog of technology-specific issues that are commonly observed across organizations. These technology-specific issues provide a unified view of all the issues that are potential candidates for automation. Service providers often maintain additional details for each issues such as how much automation is possible in an issue, how much effort is required for automation, and the like in the service catalog.

The system and method discloses an approach to evaluate a day-zero automation potential. The approach is developed by presenting a technique to map ticket logs of the issues to the service catalog. The service catalog provides a list of issues for which an automation script is already present with a service provider. By mapping tickets to the service catalog, the issues that can be potentially automated on day-zero are identified.

In a first step, in order to analyze and prioritize the issues, day zero automation may be carried out. According to an embodiment, the day zero automation is described. Day zero automation, in an embodiment of the present disclosure refers to cleaning ticket description, mapping the cleaned ticket description to action and object keyword of service catalog entry and finding best (or optional) match (or composite match) for that registered ticket for resolution. In many IT environments the issues observed are common across organizations.

This is specifically true in IT infrastructure towers such as databases, operating systems, middleware, and the like. In such environments, automation scripts developed once are usually applicable across many organizations. A catalog of existing automation capabilities is maintained in the form of technology-specific service catalog. In any new environment, initially the issues covered by the service catalog may be identified. Identification of the issues covered by the service catalog provides a day-zero automation coverage. An approach to estimate day-zero automation potential is also disclosed. An essential step for day-zero automation is to map tickets data to the service catalog. Ticket data contains various fields such as a creation time, a system of origin, severity of a problem, and various problem related attributes such as a category, a type, an item and a description of the problem. When the fields such as the category, the type, and the item are structured and finite, the fields summary or description are semi-structured or unstructured. On the other hand, entries in the service catalog are well-defined, finite, and structured. For instance, a file deletion request has a service catalog entry 'Delete a File'.

However, users may describe the issues in different ways such as 'Please delete file from M drive', 'Requesting help in removing the public file', 'erase the file to make more space', 'cut the file' and the like. Since there is heterogeneity in description of the issues, various techniques are used to correctly map a ticket description to the relevant service catalog entry, when applicable. Following are the techniques used to remove heterogeneity in description of the issues and bring in the standardization of the issues from ticket data. In one technique, while matching the English dictionary words, instead of matching the word alone, dictionary synonyms of the English dictionary words may also be matched. Matching with the dictionary synonyms ensures that the word 'delete' is mapped to synonyms of the word 'delete' such as remove and erase.

In another technique, in some scenarios, some technology-specific terms are used interchangeably. Use of technology-specific synonyms ensure that the terms 'delete file' and 'cut file' are mapped interchangeably. Another example is where 'restart a server' and 'jump a server' are used interchangeably. Further, another technique known as 'stemming' may be used in mapping of the tickets data, wherein a word is used in various derived forms. For instance, the term 'delete' is used as 'deleted', 'deleting', 'deletes' and the like. In one example, Porter's stemming algorithm may be used to reduce each word to base form of the words.

In another embodiment of the present disclosure, mapping of the tickets data to the service catalog using above mentioned techniques is described below. Preparation of ticket description is explained in detail. In preparation of the ticket description, unwanted information from the ticket description may be removed and cleaning text of the ticket description to make the text easy to match. By way of an example, an issue is described below.

*PATROLALARM 25/02/2015 06:46 Stopping the ORACLE filewatcher /ora1*

Further, one or more steps performed to clean the description comprises, remove stop words such as articles, numbers, punctuations, and the like. In the example, removing the stop words and transforming the ticket description makes the ticket description as shown below.

*PATROLALARM Stopping ORACLE filewatcher /ora1*

The next step further comprises retaining dictionary words. A description often contains information other than the issue details, not important while performing a match with the service catalog, and may mislead the matching process. Hence, as a next step of cleaning process, the non-dictionary words such as timestamp, thresholds, name of specific applications or servers facing the issues and the like may be removed. After removing non-dictionary words the ticket description is transformed as follows:

*Stopping*

In the next step, technology-specific non-dictionary words may be retained. Some issues are best explained by technology-specific words that are not valid dictionary words. Thus, as an exception to the above step, valid technology-specific non-dictionary words are retained. In the above example, the words *ORACLE* and *filewatcher* are retained as they are important for explaining the issue. Thus the ticket description is transformed as follows:

*Stopping ORACLE filewatcher*

By performing stemming, the retained dictionary words may be transformed to the root of the retained words is shown as below.

*Stop ORACLE filewatcher*

In the next step, preparation of a service catalog is described. Unlike the ticket descriptions, the service catalog is well defined, finite, and structured. However, to best match the service catalog with tickets descriptions, following preparation steps are performed. Following is an example of service catalogue entry as used.

*Stopping Oracle filewatcher services*

In a next step to defining keywords, the entry may be enriched with synonyms. As explained in the above section, the action and the object keywords may be enriched with synonyms. For instance, for the service catalog entry *Stop filewatcher service,* the service entry is enriched with the keywords as follows:

*Action = stopping, terminating, ending*

*Object = Oracle filewatcher services, Oracle filewatcher processes*

Further stemming on the keywords may be performed and the root words may be retained. In the example, the entries are updated as follows: Action = *stop, terminate, end*

Object = *Oracle filewatcher service, Oracle filewatcher service*

After preparing the keywords, matching rules may be defined for each entry in the service catalog in the form of AND, OR rules. The clauses for the AND rules define the information that must be present in the ticket description to match to the catalog entry. The OR clauses refer to the alternate choices within the AND clauses. For the present example, the rule can be defined as:

*(stop OR terminal OR end) AND Oracle AND filewatcher AND (Service OR process)*

After defining the matching rules, matching between the service catalog and the ticket descriptions may be performed. A prepared ticket description and a prepared service catalog entry may be provided to a matching technique. The matching technique may comprise, but is not limited to, identifying distinct clauses that are separated by AND rule. For example following are the distinct clauses identified for above said entry.

1) *(stop OR terminat OR end)*
2) *Oracle*
3) *filewatcher*
4) *(Servic OR process)*

The rules may be used to match the service catalog with cleaned ticket descriptions.
In the second step, the elimination of remaining issues is computed.
According to an embodiment of the present disclosure, the method for derivation of equilibrium point of an issue is described. The equilibrium point of life of issues refers to the point when cost of automated operations is equal to cost of manual operations. To compute the equilibrium point in the life of an issue two modes of operations may be compared (e.g., cost of manual operations and cost of automated operations).
In the first step of derivation of the equilibrium point, the cost of manual operations i.e., the resolution in the absence of automation may be computed. This is described by way of examples as below:

Cost of manual operations: Given the life of an issue of $L$ weeks, and $C_m$ as the weekly cost of manual operations, the total cost of manual operations may be computed as:

$$\text{Cost of manual operations} = L * C_m$$

$L$ refers to life of an issue. $C_m$ refers to the total cost of manual operations in a week. The following parameters are fed as an input:

Life of an issue, $L$ = 9 weeks
Cost of developing automation solution, $I_a$ = 1 person-hour per week
Time for developing automation solution, $A$ = 5 weeks
Cost of manual resolution of the issue, $C_m$ = 2 person-hours per week
Cost of resolution of the issue post automation, $C_a$ = 0 person-hours per week

$$\text{Cost of manual operations} = L * C_m$$
$$= 9*2 = 18 \text{ person-hour}$$

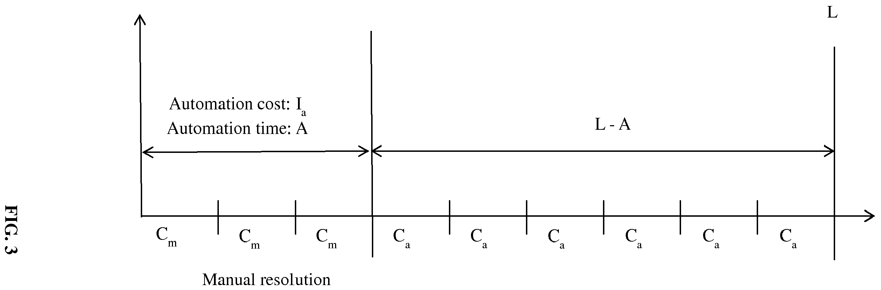

Referring to FIG. 3, different stages in the process of automation of an issue may be referred to as:

Pre-automation phase: The initial phase of *A* weeks, when automation scripts get developed, is the costliest phase with respect to (w.r.t) the efforts involved. During this period, efforts are spend on two activities: (1) *Ia* person-hours per week are spent in developing the automation solutions, (2) Also, in this phase all the incoming tickets are resolved manually. Thus, $C_m$ person-hour per week are spent in manual resolution of the incoming tickets of the issue. As a result, the total effort spent in this phase may be computed as:

$$A * (I_a + C_m)$$

Post-automation phase: Given the life of *L* weeks, the next phase consists of *L - A* weeks. In this phase, the automation solutions are in place. As a result, the weekly effort required after automated solutions is $C_a$. Hence the total effort spent in this phase may be computed as:

$$(L - A) * C_a$$

Thus, the total cost of automated operations may be computed as

$$Cost\ of\ AutomatedOps = A * (I_a + C_m) + (L - A) * C_a$$

*A* refers to the time required for developing automated solutions. $I_a$ refers to the cost of automation in person-hours per week. $C_a$ refers to the total cost of automated resolutions in a week.

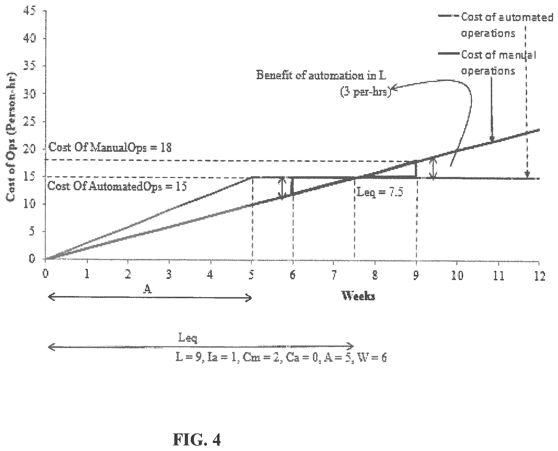

According to another embodiment of the present disclosure, referring to FIG. 4, the cost of manual operations and the cost of automated operations accumulate over a period of 9 weeks (*L*). In the absence of automation, the cost of manual operations consistently increase over a period of time from 0 person-hours to 18 person-hours. Using the same inputs as above, the cost of automated operations may be computed as:

$$Pre\ Automation\ PhaseCost = A * (I_a + C_m)$$
$$= 5 * (1 + 2) = 15\ person - hr$$

$$Post\ Automation\ PhaseCost = (L - A) * C_a$$
$$= (9 - 5) * 0 = 0\ person - hr$$

According to yet another embodiment of the present disclosure, the equilibrium point may be defined by identifying the issue that are not suitable for automation, by comparing the cost of automated operations and manual operations. For automation to be beneficial, the cost of automated operations has to be smaller than the cost of manual operations. This may be shown as:

$$Cost\ of Automatedops < Cost\ of\ Manual\ operations$$

$$A * (I_a + C_m) + (L - A) * C_a < L * C_m$$

$$L > A \left( \frac{Ia}{C_m - C_a} + 1 \right)$$

$$L > A \left( \frac{I_a}{V * C_m^t} \left( \frac{1}{1 - k} \right) + 1 \right)$$

$$\text{Given } C_m = V * C_m^t, \; C_a = V * C_a^t \text{ and } C_a^t = kC_m^t \text{ where } 0 < k < 1,$$

$$L > A \left( \frac{I_a}{V * C_m^t} \left( \frac{1}{1-k} \right) + 1 \right)$$

The equilibrium point of life of issue *Leq* may be defined as:

$$L_{eq} = A \left( \frac{I_a}{V * C_m^t} \left( \frac{1}{1-k} \right) + 1 \right)$$

Using the same inputs as above, the initial cost of accumulated operations accumulates for the first 5 weeks (*A*) from 0 *person - hours* to 15 *person - hours.* In this case, assuming 100 % automation, $C_a$ is zero. As a result, post automation cost is zero. The total cost of automated operations stays at 15 *person - hours* over a life of *L* weeks. The equilibrium point may be computed as:

$$L_{eq} = A \left( \frac{Ia}{C_m - C_a} + 1 \right)$$

$$= 7.5 \; weeks$$

Referring to FIG. 4 again, the equilibrium point of life of an issue, $L_{eq}$ is 7.5 weeks as the curves of cost of automated and manual operation intersect at that point. At this point the cost of automated operations is recovered back and automation starts becoming beneficial.

In the next step, issues with life less than the equilibrium point, $L < L_{eq}$ may be eliminated as $L_{eq}$ is the point in time when the cost of development of automation is recovered by the savings in the form of the cost of automated resolution of the issue. Hence, for automation to be beneficial life of an issue needs to be greater than the equilibrium point in the life of an issue. Using the same inputs as above, since the life of the issue (*L* = 9 *weeks*) is greater than its equilibrium point computed above ($L_{eq}$ = 7.5 *weeks*), it may not be eliminated from the potential candidates for automation.

In the next step of elimination of issues, issues with equilibrium point $L_{eq}$ greater than automated horizon in time, *W* weeks may be eliminated. Automation planners often have some automation horizon in time, *W* weeks in which they wish to plan automation. For example, if automation plans are being made for next one year, *W* = 54 *weeks,* then the benefits of automation are computed for one year ahead in time. Hence even if the life of an issue *L*, is greater than the equilibrium point, $L_{eq,}$ and it is eligible for automation, it may happen that the equilibrium point falls beyond the automated horizon. Issues for which automated horizon *W*, is less than their equilibrium $L_{eq}$, $W < L_{eq}$, are not considered for automation as for such issues cost of automation is not recovered within the automated horizon. Using the same inputs as above issues with $W < L_{eq}$, are eliminated: If automation horizon is 7 weeks, this issue may be eliminated from the potential candidates for automation as automation benefit for this issue is after automation horizon. If however automation horizon is 8 (or anything >7.5), this issue may be retained for automation.

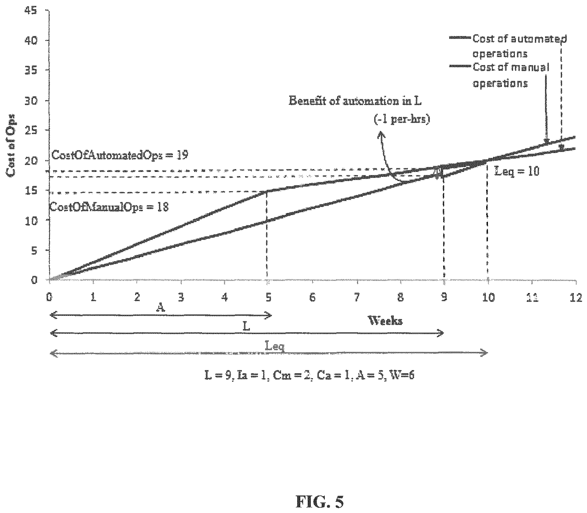

According to another embodiment of the present disclosure, referring to FIG. 5, partial automation $C_a$ > 0 is disclosed. The cost of automated is more as compared to the previous case where the cost of automation is zero. Hence $C_a$ > 0. In some cases issue resolution cannot be completely automated and hence even after automation, they need manual effort of 1 *person - hour per - week* ($C_{a)}$ for resolution. Taking the same inputs as above, cost of manual operations is 18 *person - hours,* life of issue *L is* 9 *weeks,* cost of manual resolution of the issue $C_m$ = 2, and the initial cost of automation is also unchanged and rises from 0 to 15 in 5 (*A*) *weeks.* Taking Cost of automation $C_a$ = 1 *person - hour per - week* after automation, the cost of automated operations increases even after the automation and the cumulative cost at the end of 9 weeks may calculated and expressed by way of example as:

$$Pre \; Automation \; PhaseCost = A * (Ia + C_m)$$

$$= 5 * (1 + 2) = 15 \; person - hr$$

$$Post\ Automation\ PhaseCost = (L - A) * C_a$$

$$= (9 - 5) * 1 = 4\ person - hr$$

$$Pre\ Automation\ PhaseCost = A * (Ia + C_m)$$

$$+ Post\ Automation\ PhaseCost = (L - A) * C_a = 19\ person - hours.$$

Hence the point of equilibrium is delayed to ten weeks, $Leq = 10$

In the next step, issues where the life of issue is smaller (or lesser) than the equilibrium of issue, $L < L_{eq}$, may be eliminated as the automation may not be beneficial for such cases. As the equilibrium point has now been delayed to ten weeks, $L_{eq} = 10$, the life of the issue is none weeks, $L = 9$, this issue will be eliminated.

In the next step after elimination, there is a need for prioritization of issues. Issues that live beyond the equilibrium point have a positive benefit of automation and hence are the potential candidates for automation. Due to the time and costs constraints involved in the automation, all the issues that qualify the elimination step may not be selected for prioritization. Hence there is a need to prioritize the issues for automation.

According to an embodiment of the present disclosure, issues can be prioritized by the way of effort benefits of automation. At the equilibrium point of the issue $L_{eq}$, the net benefit is 0 as the effort invested in automation is covered by the efforts saved by automation. Hence, the benefits of automation are realized only beyond this point when the life of issue is greater than the equilibrium point, $L > L_{eq}$. Automation benefit may be computed as the difference between the cost involved in manual resolution and cost involved in automated resolution of an issue beyond the equilibrium point, $L_{eq}$. Also, automated benefits are not computed beyond an automation horizon of $W$ weeks. Hence, for an issue with life of $L$ weeks, the benefits are computed for a duration $T_{end} = \min(L, W)$.

Thus, the effort benefits may be computed as:

$$Effort\ Benefit = V * (T_{end} - L_{eq}) * (C_m^t - C_a^t)$$

$$= (T_{end} - L_{eq}) * (C_m - C_a)$$

$$= V * (T_{end} - L_{eq}) * C_m^t * (1 - k)$$

$k$ is the non-automatable factor and refers to the ratio of cost of automated resolution to the cost of manual resolution. The cost of automated resolution is usually smaller than cost of manual resolution, and may be expressed as:

$$C_a^t = k C_m^t\ \text{where}\ 0 < k < 1.$$

Hence $k = \dfrac{C_a^t}{C_m^t} < 1$. $V$ refers to average volume of issue per week. Referring to FIG. 4, and using the below inputs for calculating effort benefits in case of complete automation.

$$L_{eq} = 7.5\ weeks, T_{end} - L_{eq} = 1.5\ weeks, C_m - C_a = 2\ person -$$

*hours per - week.* For clarity we assume automated horizon to be large enough and do not include in the math. Hence $T_{end} = \min(L, W)$ is assumed to be 9 weeks. $T_{end}$ is the time end and is taken as the minimum value of either life, $L$ or automated horizon, $W.$ As $L$ is 9 and $W$ is assumed to be large enough, $T_{end} = 9$.

$$\text{Hence}\ Effort\ Benefit = 1.5 * 2 = 3\ person - hours$$

Referring to FIG. 5 and using the below inputs for calculating effort benefits in case of partial automation. The issue is eliminated by constraint of $L - L_{eq}$.

$$L_{eq} = 10\ weeks, T_{end} - L_{eq} = -1\ weeks, C_m - C_a = 1\ person - hours\ per - week.$$

$$Hence\ Effort\ Benefit = (-1) * (1) = -1\ person - hours$$

Hence, there are negative benefits by automation of an eliminated issue in case of partial automation.

According to another embodiment of the present disclosure, prioritization of issues for automation may be based on the impact of automation on business critical applications. The issues generated from business critical applications make a greater business justification for automating them as there are risks of financial penalties due to Service Level Agreement (SLA) violations or poor customer experience in such cases. The details of the hardware and software inventory components which are marked with their business criticality is contained in the Configuration Management Database (CMDB). The business benefit of automating an issue can be a function of business criticality of the components observing the same.

According to another embodiment of the present disclosure, case study of IT infrastructure issues is considered. The tickets of two operating systems (Windows and UNIX) and two databases (Oracle and SQL server) are considered. A total of 170,098 tickets consisting of 55 distinct issues were analyzed. These belonged to various performance and capacity issues such as filesystem full, high CPU utilization, high thread-pool, slow SQLs etc. A history of six months was analyzed. The complexity of resolution and level of possible automation varied for these issues. For instance, the OS drive space issue has just three steps for resolution out of which two could be partially automated. For this issue cost of manual resolution $C_m^t$ is 15 *person - minutes* and post automation cost $C_a^t$ is 11.8 *person - minutes.* The initial development of automation script requires an effort of 3 *person - hours* ($I_a$) for 4 weeks. On the contrary, the SAN allocation issue is more complex with 19 steps required for resolution out of which only 5 could be automated.

In the first step of IT infrastructure case study, selection of issues for day zero automation may be made. The service catalog of four technologies which contained the details of all the issues for which automation scripts were already in placed were analyzed. 30 issues were mapped to the service catalog out of 55 distinct issues present in the tickets data. These issues covering 50,052 tickets could be selected for automation on day-zero with no extra time and cost.

In the second step of IT infrastructure case study, elimination of short-lived issues may be done. The remaining 25 issues corresponding to 120,046 tickets may be analyzed for automation. In the first step of elimination of short-lived issues, the life of issue may be computed.

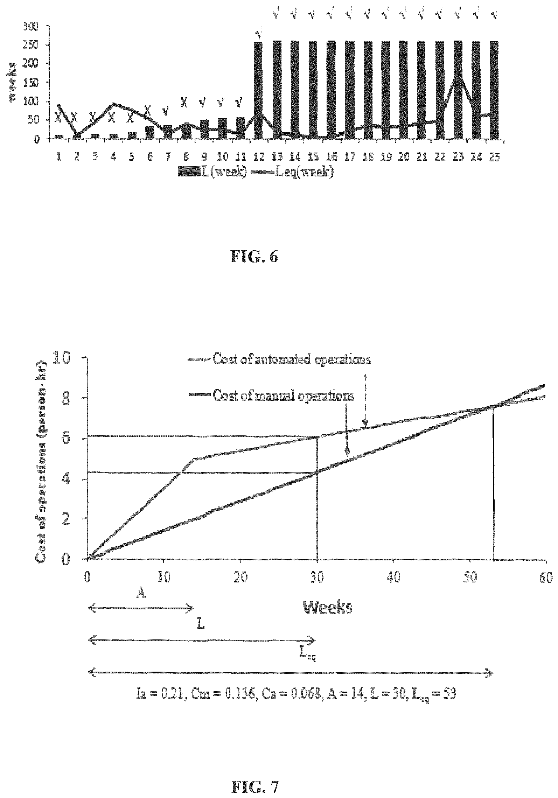

Referring to FIG. 6, the expected life of the 25 issues on the basis of the trend observed in the occurrence pattern in the tickets may be computed. The life of 12 issues showed decreasing trend with a maximum life of 50 weeks and minimum of 10 weeks for these 12 issues. Remaining 13 issues observed an increasing life trend.

Referring to FIG. 6 again, in the next step of elimination of short-lived issues, the equilibrium point of an issue $L_{eq}$ may be computed for each of the 25 issues and compared with its corresponding life $L$.

In the further step of elimination of short-lived issues, issues with life less than that of their equilibrium, $L < L_{eq,}$ may be eliminated as the automation may not be beneficial for these issues.

Referring to FIG. 6 again, it is observed that $L < L_{eq}$ for issues 1 to 6 and issue 8. As the life of these 7 issues is less than their equilibrium $L < L_{eq}$ they are eliminated and not be considered for automation.

Referring to FIG. 7 and using below inputs the equilibrium point $L_{eq}$ of issue 6 may be computed to demonstrate the elimination of issues having life less than their equilibrium point $L < L_{eq}$.

Average volume, $V$ = 1.7 tickets per-week
Cost of Automation, $I_a$ = 0.21 persons-hours per-week
Time of automation, $A$ = 13 weeks

Cost of manual resolution, $C_m^t = 0.08$ person-hours per week and the total cost of manual resolution $C_m = V * C_m$ = 0.136 person-hours per-week

Cost of automated resolution, $C_a^t = 0.04$ person-hours per week and the total cost of manual resolution

$C_a = V * C_a^t = 0.068$ person-hours per-week

Non-automatable factor, $k$ = 0.5. Hence $\frac{C_a^t}{C_m^t} = 0.5$

Hence the equilibrium point of an issue $L_{eq}$ computed using above inputs and below formula is 53 weeks.

$$L_{eq} = A \left( \frac{Ia}{C_m - C_a} + 1 \right)$$

The expected life of the issue $L$ by extrapolating historical trends may be computed as 30 weeks. Hence the life of this issue is less than the equilibrium point.

$L < L_{eq}$. Hence this issue is eliminated.

In the last step of elimination of short-lived issues, issues with automated horizon, $W$ in weeks is less than the equilibrium point, $L_{eq}$, may be eliminated as the cost of automation is not recovered within the automated horizon. In this case study, automation plans were made for one year in advance.

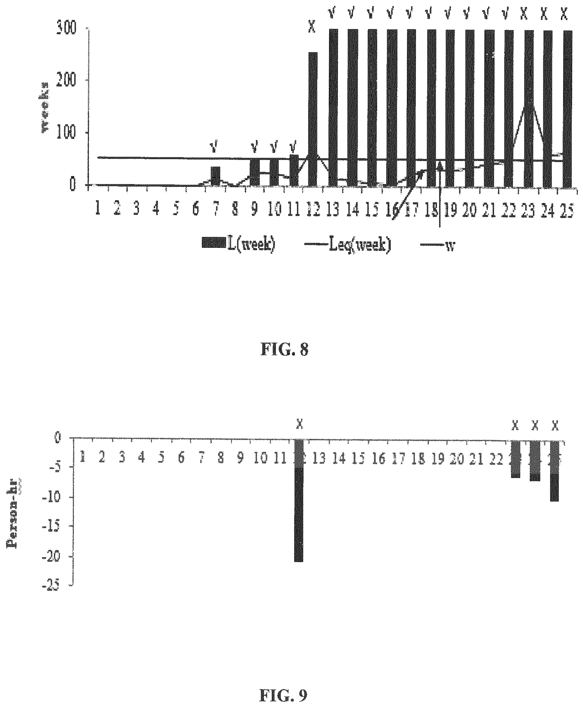

Referring to FIG. 8, a total of four issues, 12, 23, 24 and 25 with the equilibrium point, $L_{eq}$, reaching after one year.

Referring to FIG. 9, for the above four issues, 12, 23, 24 and 25 the automation benefits are negative within the automated horizon. Hence these four issues are eliminated from being considered for automation as they start realizing automation benefits after the period of one year.

In the last step of IT infrastructure case study, issues that qualify the above elimination step may be considered for prioritization. The remaining 14 issues have a life $L$, greater than their equilibrium point $L_{eq}$ and their equilibrium point arrives in less than a year.

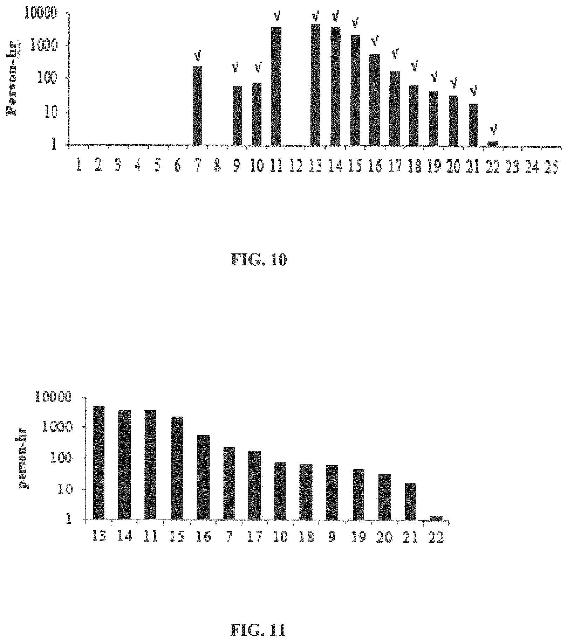

Referring to FIG. 10, benefits estimated for each of the 14 issues may be depicted. These benefits may be calculated using below equation-

$$V * (T_{end} - L_{eq}) * C_m^t * (1 - k)$$

$V$ refers to the average volume of tickets per week

$T_{end}$ is the time end and is taken as the minimum value of either life, $L$ or automated horizon, $W$.

$L_{eq}$ refers to the equilibrium point of an issue

$C_m^t$ refers to cost of manual resolution in *person - hours* per week

$k$ is the non-automatable factor and refers to the ratio of cost of automated resolution to the cost of manual resolution

Referring to FIG. 11, the 14 issues may be prioritized based on decreasing order of their benefits. The total benefit of automating top 5 issues is 14,811 person-hours over a year which may reduce the monthly effort of approximately 8 persons.

According to another embodiment of the present disclosure, case study of IT application tickets is considered. The tickets raised for the applications of one business unit of a leading retail company may be considered. The issues were specific to applications such as slowness, unable to update, failure in accessing application, URL slow, etc.

A volume of 233,413 tickets and 48 distinct types of issues may be analyzed. Tickets of a duration of 8 months may be analyzed.

In the first step of application tickets case study, selection of issues for day zero automation may be made. In case of application issues the application service catalog may not be very rich as the application issues are usually organization specific. Hence, out of 48 distinct issues, only 16 issues with volume of 33,076 tickets got mapped to service catalog for day zero automation.

In the next of application tickets case study, short-lived issues may be eliminated. Remaining 32 issues corresponding to 198,337 tickets may be analyzed to eliminate the issues which may not be considered for automation.

In the first step of elimination of issues, life of an issue $L$ may be computed. The expected life of 32 issues based on their historical trends may be computed. 9 out of 32 issues had stopped occurring during the history itself. Remaining 23 issues may be considered for further analysis.

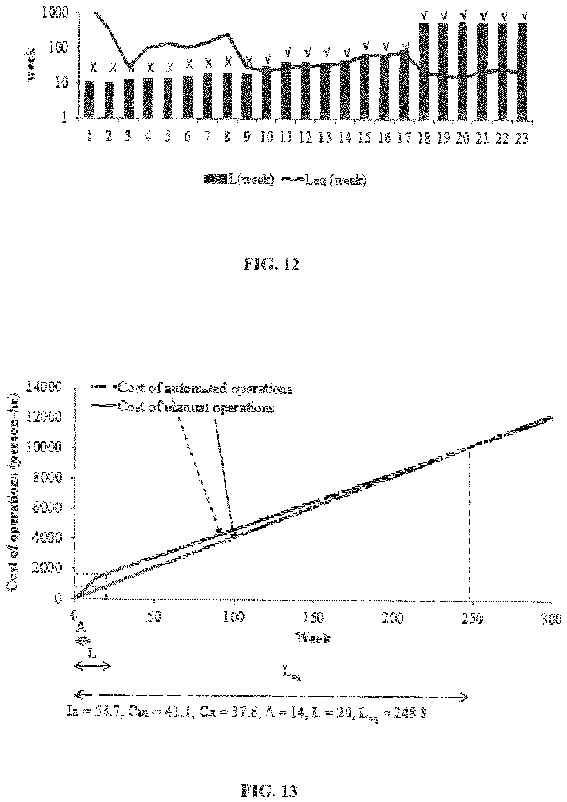

Referring to FIG. 12, it may be observed that 17 out 23 issues showed decreasing trend. These issues are related to applications that are on the way of stabilizing. Remaining 6 out of 23 issues show an increasing trend where application had recently undergone changes or upgrades. In FIG. 12, the life of an issue $L$, is shown in log-scale on Y-axis.

It may be observed that the average life of an issue $L$, may be observed to be 33 weeks as they are short-lived in comparison with the infrastructure issues. The average life of infrastructure issues was observed to be 49 weeks in previous case study.

In the second step of elimination of issues, the equilibrium point of an issue $L_{eq}$ may be computed. Referring to FIG. 12 again, the equilibrium point $L_{eq}$ may be compared with the life $L$ of an issue.

In the next step of elimination, issues with life less than the equilibrium, $L < L_{eq}$ may be eliminated. Referring to FIG. 12 once again, it may be observed that for the first 9 issues (issues 1, 2,...9), $L < L_{eq}$ and hence these may be eliminated as these do not occur long enough for automation to be beneficial.

Referring to FIG. 13, an example of issue 8 for which $L < L_{eq}$ is depicted. Using the below inputs, the equilibrium point $L_{eq}$ of issue 8 may be computed.

Average volume, $V$ = 14 tickets per-week
Cost of Automation, $I_a$ = 58.7 persons-hours per-week
Time of automation, $A$ = 14 weeks

Cost of manual resolution, $C_m^t = 2.94$ person-hours per week and the total cost of manual resolution $C_m = V *$

$C_m$ = 41.16 person-hours per-week

Cost of automated resolution, $C_a^t = 2.69$ person-hours per week and the total cost of manual resolution

$C_a = V * C_a^t = 37.66$ person-hours per-week
Non-automatable factor, $k$ = 0.91.

Referring again to FIG. 13, the equilibrium point $L_{eq}$ is 248.8 weeks for the issue 8. Hence automation is beneficial only after 248.8 weeks. The expected life of this issue $L$, may be computed to be 20 weeks by extrapolating the historical trends. It may be noted that the life of the issue $L$ is significantly less than the equilibrium point $L_{eq}$. Hence this issue is eliminated.

In the last step of elimination of short-lived issues, issues with automated horizon, $W$ is less than the equilibrium point, $L_{eq}$, may be eliminated as the cost of automation is not recovered within the automated horizon. In this case study, automation plans were made for one year in advance.

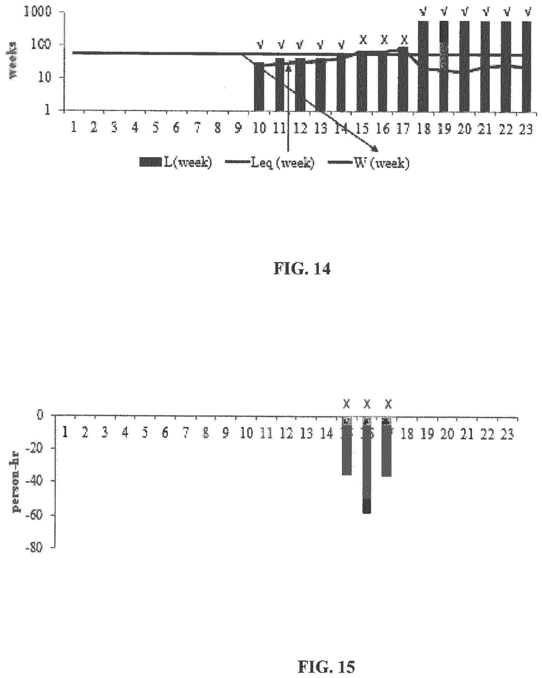

Referring to FIG. 14, it may be observed that out of the remaining 13 issues, 3 issues no 15, 16 and 17 with $W < L_{eq}$. Hence these may be eliminated for automation.

Referring to FIG. 15, it may be observed that for the issues 15, 16 and 17 eliminated above, as their automated horizon is less than their equilibrium point, their automation results in negative benefit within the automated horizon.

In final step of IT application tickets case study, issues that qualify the above elimination step may be considered for prioritization. As there are 11 issues with their life greater than the equilibrium point $L > L_{eq}$ and their equilibrium point arriving in less than automation horizon of one year, these 11 issues may be prioritized on the basis of net benefits of automation computed using the below equation-

$$V * (T_{end} - L_{eq}) * C_m^t * (1 - k)$$

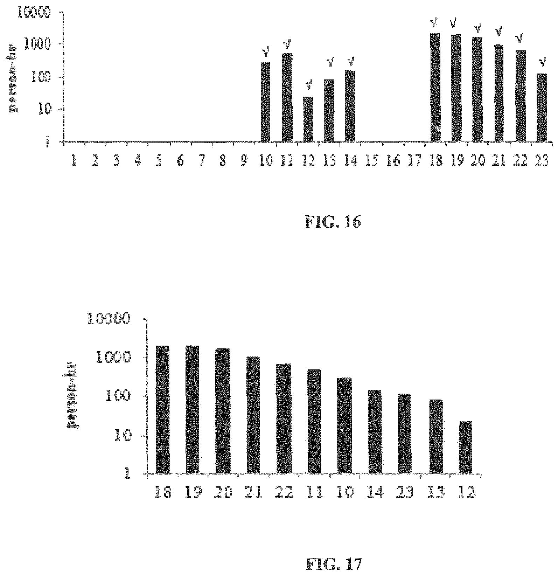

Referring to FIG. 16, the effort benefits of automation of the above 11 issues (issues 10 to 14 and issues 18 to 23) may be observed.

Referring to FIG. 17, these 11 issues may be prioritized on the basis of the decreasing order of their net benefit.

The total benefit of automating top 5 issues is 7217 person-hours over a year which may reduce the monthly effort of approximately 4 resolvers.

According to an embodiment of the present disclosure, comparison of case studies of both infrastructure and application tickets is considered. The application issues demonstrated some very specific properties. Application issues were observed to be short-lived. Some of the most common scenarios where applications observe problems are scenarios of deployment in a new environment, an existing application getting replaced by new application or deployment of a patch or an upgrade. An application goes through phases of hardening after each such change and eventually changes.

In comparison to infrastructure issues, application issues are more complex in nature and often require more manual efforts. The maximum number of resolution steps are 19 in case of infrastructure issues while in case of application issues they were observed to be 29. Hence due to high level of complexity, application issues require more cost and time to prepare automated solutions. Further application issues are observed to be unique to each organization and lack commonality across organizations.

In case of application issues the automation potential is observed to be low as compared to infrastructure issues. For example, resolution of failure of one of the applications require 23 steps but only 9 steps can be automated. Hence larger value of non-automatable factor, k may be observed.

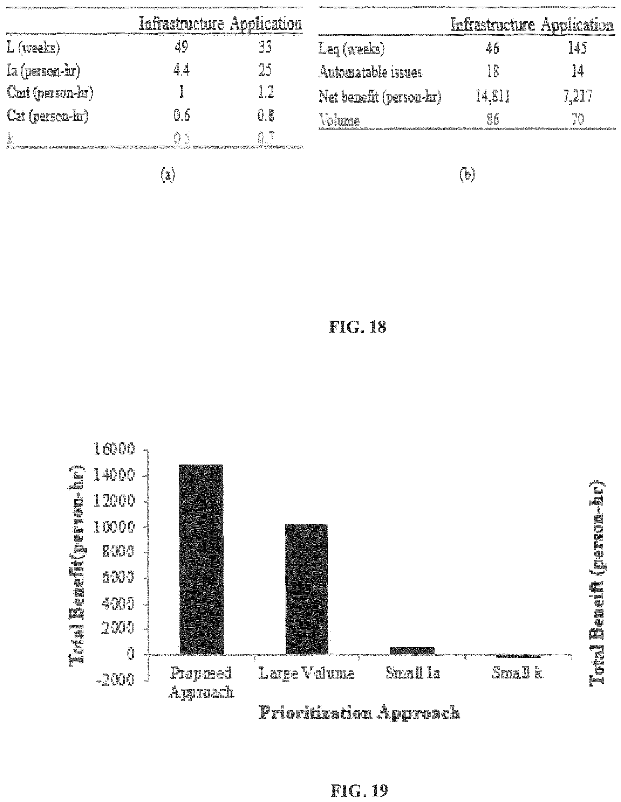

Referring to FIG. 18, average values of some of the key cost and time metrics observed across the two case-studies are compared. The average equilibrium across all issues in case of applications is 145 weeks while in case of infrastructure it is observed to be 46 weeks. This is due to high initial cost of automation, $I_a$ in case of application issues.

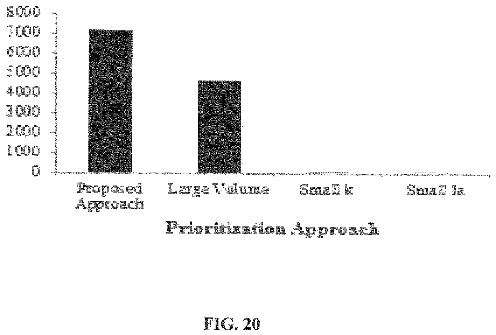

Referring again to FIG. 18, the net benefit of automating top five issues is 7217 person-hours in case of application issues, while it is 14,811 in case of infrastructure issues. It is further observed that they key reasons that explain this difference may be-
Small Life (L) : In case of the first case study relating to infrastructure issues the average life was observed to be 49 weeks while in the second case study relating to application issues, the average life was observed to 31 weeks.
Large $L_{eq}$ : Due to inherent complexity of application issues, the high value of $L_{eq}$ may be observed in case of application issues. This complexity reflects in 3 main factors: (i) high manual cost, $C_m^t$ (ii) high non-automatable factor, $k$ (iii) high effort to make automation solutions, $I_a$.
Few automatable issues in case of application tickets due to smaller life $L$ and larger equilibrium $L_{eq}$.
Low volume: In the case study of application tickets may also be due to lower volume of average monthly tickets per issue.
According to an embodiment of the present disclosure, the approaches of prioritization of both infrastructure and application issues are considered. The approaches of prioritization followed currently by the automation planners with the present disclosure in the infrastructure issues is considered. The automation planners generally prioritized the issues by deriving heavy-hitters on the basic parameters such as volume ($V$), or automation cost ($I_a$), or non-automatable factor ($k$).
Referring to FIG. 19, the net automation benefits of the top 5 issues identified by the present approach with the ones followed by the automation planners of computing heavy-hitters by the above three parameters is compared. The approach followed by the proposed invention results in highest yearly benefit of 14,811 person-hours. The second best approach is the one based on large volume and results in the benefits of 10,183 person-hours. Further, the approach which prioritizes the issues on the basis of non-automatable factor, k results in the negative benefit of -88 person-hours. In this case the cost spent in the automation is not recovered in the life-tome of an issue.
According to another embodiment of the present disclosure, the approaches of prioritization followed currently by the automation planners with the present disclosure in the application issues is considered. Referring to FIG. 20, the benefits achieved by using current heavy-hitter approaches with the benefits achieved by the approach by the proposed invention is compared. The proposed approach results in highest benefit of 7,217 person-hours. The smallest benefit is achieved by prioritization of issues by automation cost, $I_a$. The benefits in this case is almost zero.
The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.
The embodiments of present disclosure herein addresses unresolved problem of analyzing and prioritization of issues for automation. The embodiment, thus provides a method for addressing issues associated with automation, and more particularly to, system and method for analyzing and prioritizing issues for automation that results in benefits. Moreover, the embodiments herein further provides approach that proposes to select only those issues for automation that are expected to last long enough to repay the cost invested in their automation. Further, the proposed approach prioritizes the issues on the basis of the benefits realized by automation of an issue with respect to the cost of implementing automation and savings in the cost of resolution of the issue due to automation.
It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.
The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computerusable or computer readable medium can be any apparatus that can comprise, store, communicate, propagate, or transport the program for use by or in connection with the instruction execution system, apparatus, or device.
The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope and spirit of disclosed embodiments being indicated by the following claims.


**Claims**

1. A method for analyzing and prioritizing issues for automation, the method comprising a processor implemented steps of

   obtaining, by one or more hardware processors, one or more registered tickets comprising description pertaining to one or more issues of a user;

   mapping description of said one or more registered tickets to one or more corresponding entries in one or more service catalogs in the system;

   determining, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs;

   identifying at least a subset of said one or more registered tickets for day-zero automation resolution based on said one or more composite and ambiguous matches;

   computing, by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation;

   computing, by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation;

   computing, by said one or more hardware processors, an equilibrium point of the one or more issues described in said one or more registered tickets selected for day-zero automation based on a comparison of (i) the computed total cost of automated operations and (ii) the computed total cost of manual operations to select the one or more issues suitable for automation; and

   selecting, based upon the equilibrium point computed, the one or more issues for automating for optimizing the efforts involved in resolution of the one or more issues.

2. The processor implemented method of claim 1, wherein the step of selecting the one or more issues for automation further comprises:

   eliminating the one or more issues where the life of the one or more issues is less than the equilibrium point computed for the one or more issues for further determining one or more issues to be automated; and

   performing, based upon the one or more issues determined for automation, a prioritization of the one or more issues for computing an optimized value of automating the one or more issues determined for automation within a pre-defined time value.

3. The processor implemented method of claim 2, wherein the step of performing the prioritization further comprises eliminating the one or more issues determined for automation for which the computed equilibrium point is greater than the pre-defined time value.

4. A system comprising:

a memory storing instructions;
one or more communication interfaces; and
one or more hardware processors coupled to the memory via the one or more communication interfaces, wherein the one or more hardware processors are configured by the instructions to:

obtain, by one or more hardware processors, one or more registered tickets comprising description pertaining to one or more issues of a user;
map description of said one or more registered tickets to one or more corresponding entries in one or more service catalogs in the system;
determine, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs;
identify at least a subset of said one or more registered tickets for day-zero automation resolution based on said one or more composite and ambiguous matches;
compute, by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation;
compute, by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation;
compute, by said one or more hardware processors, an equilibrium point of the one or more issues described in said one or more registered tickets selected for day-zero automation based on a comparison of (i) the computed total cost of automated operations and (ii) the computed total cost of manual operations to select the one or more issues suitable for automation; and
select, based upon the equilibrium point computed, the one or more issues for automating for optimizing the efforts involved in resolution of the one or more issues.

5. The system of claim 4, wherein the one or more hardware processors are further configured to:

eliminate the one or more issues where the life of the one or more issues is less than the equilibrium point computed for the one or more issues for further determining one or more issues to be automated; and
perform, based upon the one or more issues determined for automation, a prioritization of the one or more issues for computing an optimized value of automating the one or more issues determined for automation within a pre-defined time value.

6. The system of claim 4, wherein the one or more hardware processors are further configured to eliminate the one or more issues determined for automation for which the computed equilibrium point is greater than the pre-defined time value for performing the prioritization.

7. One or more non-transitory machine readable information storage mediums comprising one or more instructions which when executed by one or more hardware processors causes the one or more hardware processor to perform a method for analyzing and prioritizing issues for automation, said method comprising:

obtaining, by one or more hardware processors, one or more registered tickets comprising description pertaining to one or more issues of a user;
mapping description of said one or more registered tickets to one or more corresponding entries in one or more service catalogs in the system;

determining, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs;

identifying at least a subset of said one or more registered tickets for day-zero automation resolution based on said one or more composite and ambiguous matches;

computing, by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation;

computing, by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation;

computing, by said one or more hardware processors, an equilibrium point of the one or more issues described in said one or more registered tickets selected for day-zero automation based on a comparison of (i) the computed total cost of automated operations and (ii) the computed total cost of manual operations to select the one or more issues suitable for automation; and

selecting, based upon the equilibrium point computed, the one or more issues for automating for optimizing the efforts involved in resolution of the one or more issues.

8. The one or more non-transitory machine readable information storage mediums of claim 7, wherein the step of selecting the one or more issues for automation further comprises:

eliminating the one or more issues where the life of the one or more issues is less than the equilibrium point computed for the one or more issues for further determining one or more issues to be automated; and

performing, based upon the one or more issues determined for automation, a prioritization of the one or more issues for computing an optimized value of automating the one or more issues determined for automation within a pre-defined time value.

9. The one or more non-transitory machine readable information storage mediums of claim 7, wherein performing the prioritization further comprises eliminating the one or more issues determined for automation for which the computed equilibrium point is greater than the pre-defined time value.

SYSTEM
100

MEMORY
102

HARDWARE PROCESSOR
104

INTERFACE
106

FIG. 1

Obtaining, by one or more hardware processors, one or more registered tickets comprising description pertaining to one or more issues of a user — 202

Mapping description of said one or more registered tickets to one or more corresponding entries in one or more service catalogs in the system — 204

Determining by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs — 206

Identifying at least a subset of said one or more registered tickets for day-zero automation resolution based on said one or more composite and ambiguous matches — 208

Computing by said one or more hardware processors, a total cost of manual operations of the one or more issues as a product of a time taken to automate the one or more issues and a cost of manual resolution of the one or more issues, based on the one or more issues identified from the one or more of said registered tickets selected for day-zero automation — 210

A

FIG. 2

A

Computing by said one or more hardware processors, a total cost of automated operations of the one or more issues as a sum of total efforts spent in automating the one or more issues and the cost of manual resolution of the one or more issues, based on the one or more issues identified from the one or more of said registered tickets selected for day-zero automation

212

Computing by said one or more hardware processors, an equilibrium point of the one or more issues described in said one or more registered tickets selected for day-zero automation based on a comparison of (i) the computed total cost of automated operations and (ii) the computed total cost of manual operations to select the one or more suitable issues for automation

214

Selecting based upon the equilibrium point computed, the one or more issues for automating for optimizing the efforts involved in resolution of the one or more issues.

216

**FIG. 2 (cont.)**

**FIG. 3**

FIG. 4

FIG. 5

**FIG. 6**

Ia = 0.21, Cm = 0.136, Ca = 0.068, A = 14, L = 30, L$_{eq}$ = 53

**FIG. 7**

**FIG. 8**

**FIG. 9**

**FIG. 10**

**FIG. 11**

**FIG. 12**

$Ia = 58.7, Cm = 41.1, Ca = 37.6, A = 14, L = 20, L_{eq} = 248.8$

**FIG. 13**

**FIG. 14**

**FIG. 15**

**FIG. 16**

**FIG. 17**

|  | Infrastructure | Application |
|---|---|---|
| L (weeks) | 49 | 33 |
| Ia (person-hr) | 4.4 | 25 |
| Cmt (person-hr) | 1 | 1.2 |
| Cat (person-hr) | 0.6 | 0.8 |
| k | 0.5 | 0.7 |

(a)

|  | Infrastructure | Application |
|---|---|---|
| Leq (weeks) | 46 | 145 |
| Automatable issues | 18 | 14 |
| Net benefit (person-hr) | 14,811 | 7,217 |
| Volume | 86 | 70 |

(b)

**FIG. 18**

**FIG. 19**

FIG. 20

EP 3 282 404 A1

Europäisches Patentamt
European Patent Office
Office européen des brevets

**EUROPEAN SEARCH REPORT**

Application Number

EP 17 18 5710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/066598 A1 (BRANCH JOEL W [US] ET AL) 5 March 2015 (2015-03-05) * paragraphs [0014] - [0036] * | 1-9 | INV. G06Q10/00 G06Q10/06 |
| X | US 2014/325254 A1 (MANI SENTHIL K K [IN] ET AL) 30 October 2014 (2014-10-30) * paragraphs [0003] - [0006] * * paragraphs [0022] - [0031] * * figure 11 * | 1-9 | |
| X | US 2014/129536 A1 (ANAND RANGACHARI [US] ET AL) 8 May 2014 (2014-05-08) * paragraphs [0003] - [0006] * * paragraphs [0061] - [0081] * | 1-9 | |
| X | US 2010/082620 A1 (JENNINGS III RAYMOND B [US] ET AL) 1 April 2010 (2010-04-01) * paragraphs [0079] - [0084] * | 1-9 | |
| X | US 2013/205007 A1 (AYACHITULA NAGA A [US] ET AL) 8 August 2013 (2013-08-08) * paragraphs [0058] - [0066] * | 1-9 | TECHNICAL FIELDS SEARCHED (IPC) |
| X | US 2013/282725 A1 (RUBINGER BENJAMIN I [US]) 24 October 2013 (2013-10-24) * paragraphs [0016] - [0029] * | 1-9 | G06Q |

The present search report has been drawn up for all claims

| Place of search | Date of completion of the search | Examiner |
|---|---|---|
| Munich | 4 October 2017 | Breidenich, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

35

## ANNEX TO THE EUROPEAN SEARCH REPORT
## ON EUROPEAN PATENT APPLICATION NO.

EP 17 18 5710

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2017

| Patent document cited in search report | | Publication date | Patent family member(s) | | Publication date |
|---|---|---|---|---|---|
| US 2015066598 | A1 | 05-03-2015 | NONE | | |
| US 2014325254 | A1 | 30-10-2014 | NONE | | |
| US 2014129536 | A1 | 08-05-2014 | US 2014129536 A1<br>US 2016196501 A1 | | 08-05-2014<br>07-07-2016 |
| US 2010082620 | A1 | 01-04-2010 | NONE | | |
| US 2013205007 | A1 | 08-08-2013 | NONE | | |
| US 2013282725 | A1 | 24-10-2013 | NONE | | |

EPO FORM P0459

For more details about this annex : see Official Journal of the European Patent Office, No. 12/82

**EP 3 282 404 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201621027362